# EUROPEAN PATENT SPECIFICATION

(11) **EP 3 936 277 B1**
(45) Date of publication and mention of the grant of the patent: **26.02.2025**
(21) Application number: 21182029.5
(22) Date of filing: 28.06.2021
(51) Int. Cl.: B23K 37/04, B23Q 3/08, B23Q 3/06, B25B 5/06, B23B 31/30, B23B 31/12

(54) **SET OF A HYDRAULIC CONTROL UNIT AND A HYDRAULIC WORKPIECE CLAMPING DEVICE ; CNC MACHINE WITH SUCH SET**
SET AUS EINER HYDRAULISCHEN STEUEREINHEIT UND EINER HYDRAULISCHEN WERKSTÜCKSPANNVORRICHTUNG ; CNC-MASCHINE MIT EINEM SOLCHEN SET
ENSEMBLE COMPRENANT UNE UNITÉ DE COMMANDE HYDRAULIQUE ET UN DISPOSITIF HYDRAULIQUE DE SERRAGE DE PIÈCE ; MACHINE CNC AVEC UN TEL ENSEMBLE

(30) Priority: 09.07.2020 BE 202005511
(43) Date of publication of application: 12.01.2022
(73) Proprietor: RoboJob N.V., 2220 Heist-op-den-Berg (BE)
(72) Inventor: DE ROOVERE, Helmut, 3140 Keerbergen (BE)
(74) Representative: Philippaerts, Yannick

(56) References cited:
- EP-A1- 1 793 127
- CN-A- 108 591 139
- CN-U- 203 471 436
- US-A1- 2015 013 145

## Description

The invention relates to the clamping of workpieces in a CNC machine.

Five-axis CNC machines typically have passages for pneumatic or hydraulic conduits to the machine table. Such machines typically do not have passages for electrical conduits. The workpiece carrier is provided with a clamp which is connected to the pneumatic or hydraulic conduits in order to clamp and unclamp a workpiece.

CN203471436 U ( disclosing the preamble of claims 1 and 13 respectively) describes a hydraulic clamp comprising grippers and sliding blocks arranged slidably on a base. A hydraulic cylinder is arranged at one outer end of the base and configured to displace one of the grippers.

A drawback of this clamp is that it has only a limited stroke. This works well for clamping workpieces having roughly the same size, which is suitable for manufacturing workpieces in large volumes. For clamping of workpieces with dimensions greater than the stroke of the clamp, the clamp must be replaced with a clamp having a stroke corresponding to the dimensions of the workpiece. Another drawback of this clamp is that workpieces having a size considerably smaller than the stroke of the clamp cannot be clamped because the clamp is unable to grip the smaller workpiece with both grippers due to the limited stroke. When limited volumes are made, the result is that the clamp must be replaced regularly. Replacing a clamp is time-consuming and labour-intensive, which considerably increases the production cost of limited volumes.

It is an object of the invention to provide a workpiece clamping device which can be utilized more flexibly and efficiently.

According to the present invention, a set of a hydraulic control unit and a hydraulic workpiece clamping device is defined in claim 1.

A CNC machine comprising such set is defined in claim 13.

Preferred embodiments of the set are defined in the dependent claims 2-12.

The hydraulic control device comprises a servomotor. A servomotor has the feature that it can be position-controlled on one hand and torque-controlled on the other. The servomotor is a drive which is accurate and dynamic. A servomotor is furthermore electrically controllable. The servomotor makes use of an internal feedback. The feedback is realized in that a feedback signal is generated in the servomotor. The feedback signal is representative of a current position of the servomotor. When the servomotor is position-controlled, the servomotor continually compares a control signal to the feedback signal. The control signal is representative of a desired position of the servomotor. As soon as there is a difference between the control signal and the feedback signal, the servomotor changes its position on the basis of the difference, whereby the feedback signal changes. As soon as the difference is zero, the servomotor maintains its position. The servomotor is thus position-controlled. This is a position control, i.e. the position of the servomotor always maintains the desired position. Because the servomotor is coupled to the hydraulic pump, the position-controlled control of the servomotor is translated to a control of the hydraulic pump which is proportional to the position control of the servomotor. Because of the hydraulic coupling of the hydraulic pump to the hydraulic cylinder via the hydraulic conduits, this therefore allows the hydraulic cylinder to move in a fixed ratio relative to the movement of the servomotor. In other words, a predetermined change in position of the servomotor will result in a corresponding predetermined proportional change in the position of the hydraulic cylinder. Because the movement of the servomotor results in a proportional movement of the hydraulic cylinder, a position of the workpiece clamping device can be controlled in accurate and safe manner. This has the advantage that a workpiece clamp with a relatively great stroke can be used to clamp workpieces of different forms and/or dimensions in efficient manner. Owing to the proportional movement thereof, the workpiece clamping device can adjust itself in simple manner to a workpiece to be clamped. The workpiece clamping device can hereby also be utilized flexibly, whereby it will need to be replaced less frequently, or almost never. This allows relatively small production volumes to be produced more cheaply.

A further advantage is based on the insight that the servomotor is also controllable on the basis of a torque control. When clamping a workpiece, a displacement of the first and/or second clamping arm will more likely be limited, while the clamping force increases. The clamping force is proportional to the oil pressure in the hydraulic cylinder, while the displacement of the clamping arms is proportional to the displaced volume of oil. The position control of the servomotor allows the amount of displaced volume to be accurately controlled. The torque control of the servomotor allows the pressure in the hydraulic cylinder to be controlled. More specifically, the exerted torque will be proportional to the pressure in the hydraulic cylinder. Increasing the torque of the servomotor results in an increase in the pressure in the hydraulic pump and translates to a proportional increase of the force with which the hydraulic cylinder operates, and thereby an increase in the force with which the workpiece is clamped.

The hydraulic pump is preferably an axial plunger pump which is provided with a housing and a piston, wherein the piston is displaceable in the housing and is displaceable by the servomotor. An advantage hereof is based on the insight that a volume displacement in the axial plunger pump is proportional to the distance travelled by the piston in the housing. The proportional movement can therefore be dimensioned and set in simple manner. The oil pressure which is built up in the axial plunger pump is further proportional to the force exerted by the hydraulic cylinder.

The hydraulic control unit can preferably be placed outside the workroom of the CNC machine. An advantage hereof is based on the insight that electrical connections in the workroom of the CNC machine are typically not present and/or available. By placing the control unit outside the workroom of the CNC machine use can be made of a servomotor which is electrically controllable but wherein the connection to the clamp in the workroom can be formed by two hydraulic conduits with optional rotary unions.

The hydraulic workpiece clamping device preferably further comprises a frame, wherein the first and second clamping arm are coupled to the frame and wherein the frame is configured to be coupled releasably to the worktable of the CNC machine. This allows the workpiece clamping device to be removed simply and in its entirety from the worktable.

The frame preferably further comprises a guide for guiding the first clamping arm in a linear direction and wherein the second clamping arm is mounted on the frame of the workpiece clamping device. This allows a freedom of movement of the clamping arm arranged on the guide to be limited such that the clamping arm is only movable in one direction. Tilting movements of the clamping arm are for instance avoided hereby, whereby workpieces are always clamped in the same way.

The first clamping arm and the second clamping arm are preferably provided on a mechanical coupling mechanism such that the first and the second clamping arm move proportionally relative to each other so as to centrically clamp a workpiece. The centric clamping of a workpiece is advantageous because the worktable of the CNC machine is thereby balanced better when it moves. This is preferably relevant for five-axis CNC machines. The accessibility of the workpiece is also maximized.

A piston of the hydraulic cylinder is preferably coupled to the first clamping arm and the housing of the hydraulic cylinder is preferably coupled to the second clamping arm so as to move the first and the second clamping arm proportionally relative to each other. The mechanical coupling mechanism further preferably comprises two arms, each having a respective first and second segment, wherein the two arms are coupled pivotally to each other at the position of their respective first segments and wherein the second segments are coupled to respectively the first and the second clamping arm. Because the two arms of the mechanical coupling mechanism are coupled pivotally to each other and the piston is coupled to the first clamping arm and the housing to the second clamping arm, a movement of the servomotor will result in a movement of the first and second clamping arm. This allows the two clamping arms to move using one single hydraulic cylinder.

A stroke, X, of the workpiece clamping device is preferably at least 100 mm, preferably at least 150 mm, more preferably at least 250 mm. A greater stroke allows workpieces with more varying and differing dimensions to be clamped, this further improving the flexible utility of the set.

The hydraulic control unit preferably further comprises a feedback means configured to feed a position of the clamp back to the CNC machine. The CNC machine can be controlled on the basis of information obtained by the feedback means. More specifically, undesired variations can be detected in order to ensure the safety of the CNC machine. During clamping of the workpiece, the servomotor will for instance be in torque control. Under normal conditions the torque will be high in order to realize the clamping, and the position will remain unchanged, because the workpiece is located between the clamping arms. When it is nevertheless detected that the position becomes smaller, this may mean that the workpiece has become detached, and the operation of the CNC machine can be stopped. A feedback means can thus be used to increase safety and improve operation.

The hydraulic cylinder is preferably provided for the purpose of moving the first clamping arm, wherein a further hydraulic cylinder is provided for the purpose of moving the second clamping arm, which further hydraulic cylinder is connected via further hydraulic conduits to a further hydraulic pump coupled to a further servomotor. The two clamping arms can hereby be moved by different servomotors. This allows a further improvement of the accuracy of the workpiece clamping device. Because the two clamping arms are moreover individually controllable, the workpiece clamping device can also be utilized more flexibly.

The control unit preferably comprises a controller configured to control the control unit on the basis of a position status and/or a clamping status, wherein in the position status the controller controls the control unit such that the first clamping arm is displaceable between a first position and a second position, wherein the second position is a position wherein the first clamping arm and the second clamping arm initially touch a product to be clamped and wherein the clamping status primarily comprises of increasing the pressure in the hydraulic cylinder in order to realize clamping of the workpiece. A distance between the clamping arms can be controlled accurately and rapidly through the use of the position status. This allows the hydraulic clamping arm to be configured in accordance with a workpiece in rapid and simple manner. In other words, the distance between the clamping arms can be changed in order to place and clamp workpieces with considerably differing dimensions, without the whole workpiece clamping device having to be replaced. Because increasing the pressure in the hydraulic cylinder is only carried out initially in the clamping status, clamping of the workpiece is simpler and the set is safer in use. This is because, when a body part of a user for instance ends up between the workpiece clamping device, no appreciable pressure will be exerted in the position status. In other words, in the position status a detection of a premature increase of the pressure can be seen as an indication that there is an obstacle between the clamps, and an alarm signal can be generated. The further movement of the clamp can be stopped on the basis of this alarm signal. Occupational accidents can hereby be avoided.

The controller is further preferably configured to control the control unit on the basis of an initialization status. In the initialization status a zero point is set in that the control unit moves the first and the second clamping arm toward each other until they touch each other. The state in which the first clamping arm and the second clamping arm are in mutual contact, i.e. touch each other, is deemed the zero point of the workpiece clamping device. Once the zero point is known, a position of the first and/or second clamping arm is thus always known during displacement of the first and/or second clamping arm owing to the feedback from the servomotor. This allows for instance a dimension of workpieces to be verified or to feed the coordinates of the first and/or second clamping arm back to the CNC machine so that the CNC machine can be prevented from machining the first or second clamping arm.

The invention will now be further described on the basis of an exemplary embodiment shown in the drawing.

In the drawing:
Figures 1A and 1B show cross-sectional side views of a set of a hydraulic control unit and a hydraulic workpiece clamping device in two states;
Figure 2 shows schematically a side view of an embodiment of a hydraulic workpiece clamping device according to the invention;
Figure 3 shows a cross-section of an embodiment of a hydraulic control unit and a hydraulic workpiece clamping device.

The following detailed description relates to determined specific embodiments. The teachings hereof can however be applied in different ways. In the drawings the same or similar elements are designated with the same reference numerals.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

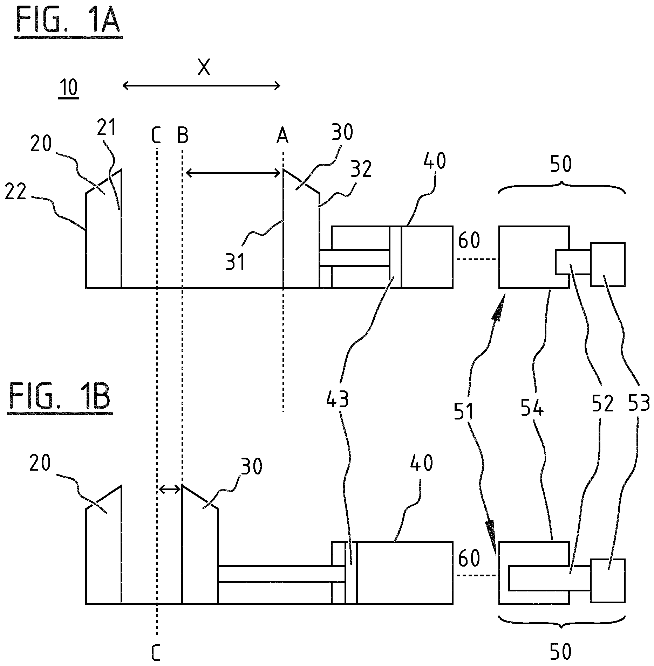

Figures 1A, 1B show a set of a hydraulic workpiece clamping device 10 and a hydraulic control unit 50 in two different states. The hydraulic workpiece clamping device 10 is configured to clamp a workpiece on a worktable in a workroom of a CNC machine. For this purpose the workpiece clamping device is provided with a first clamping arm 20 and a second clamping arm 30. The first clamping arm 20 and the second clamping arm 30 are mounted at a mutual distance. The distance X in figure 1A illustrates the maximum opening X of the workpiece clamping device. The maximum opening X of the workpiece clamping device is preferably at least 100 mm, preferably at least 150 mm, more preferably at least 250 mm. The maximum opening X is directly related to the maximum stroke of hydraulic cylinder 40. First clamping arm 20 and second clamping arm 30 each comprise a mutually facing stop surface 21, 31 which is provided to engage a workpiece. In other words, the stop surfaces are directed inward. The first and second clamping arm 20, 30 preferably comprise a further stop surface 22, 32 provided opposite the respective stop surface of the respective clamping arm. In other words, the further stop surfaces 22, 32 are directed outward. The workpiece clamping device can thus engage an outer side of a workpiece via the inward directed stop surfaces 22, 32 and, alternatively via the outward directed stop surfaces, engage a cavity of a workpiece.

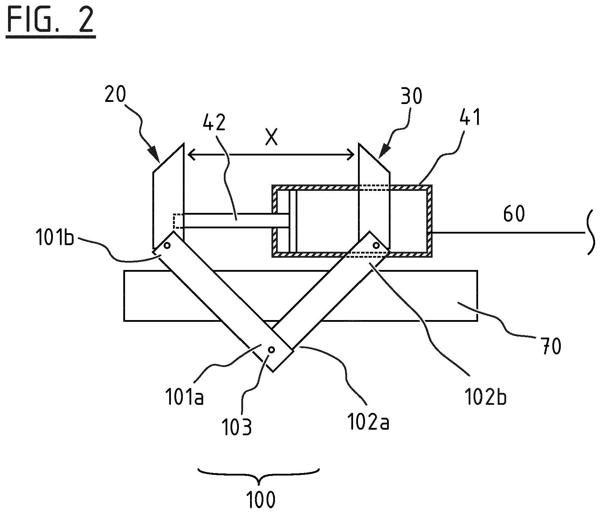

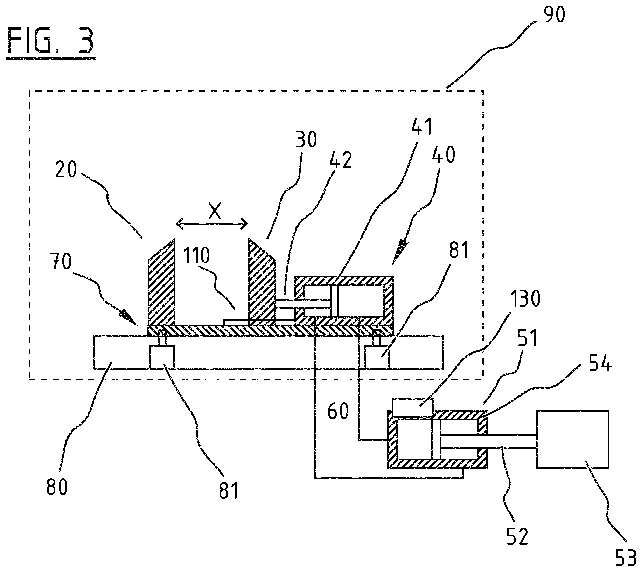

The workpiece clamping device 10 further comprises a hydraulic cylinder 40. The hydraulic cylinder 40 is configured to change the opening X between first clamping arm 20 and second clamping arm 30 so as to clamp the workpiece. For this purpose first clamping arm 20 and/or second clamping arm 30 can be displaceable. In the shown embodiment the second clamping arm 30 in particular is coupled to the hydraulic cylinder 40, whereby second clamping arm 30 is displaceable relative to first clamping arm 20. In such an embodiment first clamping arm 20 is preferably fixedly mounted. In other words, the first clamping arm is not movable. It will however be apparent that it is also possible for first clamping arm 20 to be displaceable and couplable to the hydraulic cylinder (not shown), and for second clamping arm 30 to be fixedly mounted. The clamping arm can for instance be fixedly mounted on a frame 70 as illustrated in figure 3. Because one of the clamping arms is displaceable relative to the other clamping arm, a position of the workpiece clamping device can be efficiently controlled. As discussed at length below with reference to figure 2, both clamping arms 20, 30 may be displaceable.

Hydraulic cylinder 40 comprises a cylinder housing in which a piston 43 is movable. The piston comprises a piston rod which extends through the cylinder housing and is configured to be coupled to one of the first or second clamping arm 20, 30. In an embodiment wherein only one clamping arm is movable the position of the housing of the hydraulic cylinder is fixedly mounted such that a movement of the piston rod results in a movement of the coupled clamping arm. The hydraulic cylinder 40 can be a single-action cylinder. A single-action cylinder has the advantage that it can be controlled in simpler manner because it has a self-driven return stroke. In an alternative embodiment the hydraulic cylinder can be a double-action cylinder, which allows further improvement of the precision of the workpiece clamping device. In yet another embodiment, wherein each of the clamping arms has two stop surfaces as described above, a double-action cylinder allows both an outer side of a workpiece to be engaged and a cavity of a workpiece to be engaged using one workpiece clamping device. This further increases the utility of the workpiece clamping device.

Hydraulic cylinder 40 is hydraulically coupled to a hydraulic control unit 50 via hydraulic conduits 60. In other words, hydraulic conduits 60 extend between the hydraulic control unit 50 and the hydraulic cylinder 40. Hydraulic cylinder 40 and the hydraulic control unit are thus mutually coupled for liquid communication. Hydraulic cylinder 40, hydraulic control unit 50 and hydraulic conduits 60 can together form a closed circuit.

Hydraulic control unit 50 comprises a servomotor 53 which is coupled to a hydraulic pump 51. Hydraulic pump 51 is connected via hydraulic conduits 60 to hydraulic cylinder 40 such that a movement of the servomotor results in a proportional movement of the hydraulic cylinder. Servomotor 53 is a drive which is accurate and dynamic. A servomotor is moreover electrically controllable. The electrical control of a servomotor is simple and is furthermore realized with known control units. According to the present invention, the servomotor is controllable in two ways. A first way is on the basis of a position control, wherein the position of the servomotor is controlled. A second way is on the basis of a torque control, wherein the torque produced by the servomotor is controlled. By coupling the servomotor to hydraulic pump 51 the following effect is achieved. A change in position of the servomotor is directly related to a quantity of displaced oil, which in turn is directly related to a change in position of the hydraulic cylinder. The position of the piston in the hydraulic cylinder can thus be controlled by position control of the servomotor. A change in torque of the servomotor is directly related to a pressure in the hydraulic cylinder. The clamping force of the hydraulic cylinder can thus be controlled by torque control of the servomotor.

Servomotor 53 makes use of a feedback. The feedback is realized in that a feedback signal is generated in the servomotor, for instance by means of an encoder. The feedback signal is representative of a current position of the servomotor. Servomotor 53 continually compares a control signal supplied by a user to the feedback signal. The user is not necessarily a person, but can also be a further device which passes on instructions, for instance a PLC which controls a process. The control signal is representative of a desired position of the servomotor. As soon as there is a difference between the feedback signal and the control signal, servomotor 53 controls its position. The feedback signal changes hereby in that the position of the servomotor changes. As soon as the difference signal is zero, the servomotor stops. This is a position control, i.e. the position of the servomotor always maintains the desired position.

The hydraulic pump 51 is preferably a volumetric pump. The volumetric pump displaces a volume of liquid which is proportional to a movement of piston 52. Because the servomotor is coupled to the hydraulic pump, the position control of the servomotor results in a control of the hydraulic pump which is proportional to the position control of the servomotor. The volume displacement is therefore proportionally controllable because the position of the servomotor is controllable. A hydraulic control unit 50 having a proportional control is therefore realized hereby. Because of the hydraulic coupling via the hydraulic conduits, this therefore allows the hydraulic pump to be moved in a fixed ratio relative to the movement of the servomotor. The hydraulic pump is more preferably an axial plunger pump provided with a housing and a piston 52. The housing bounds a predetermined volume of liquid. Piston 52 is coupled to the servomotor 53 such that the piston is displaceable in the housing by the servomotor.

Figure 1A shows the set in a first state. In the first state of workpiece clamping device 10 the first and the second clamping arms 20, 30 preferably lie at a maximum distance from each other. In the first state the opening X of the clamping device is maximal. When workpiece clamping device 10 is in the first state, a workpiece is placeable in simple manner between the first and the second clamping arm 20, 30. When servomotor 53 moves the piston 52 in the housing 54 of hydraulic pump 51, the movement of the piston realizes a volume displacement of the liquid from the housing. Piston 52 hereby pushes out liquid situated in the housing. The volume displacement is proportional to a volume of a part of the piston 52 which moves in the housing. Because servomotor 53 displaces piston 52 and the position of servomotor 53 is known, the position of piston 52 is therefore also known. The position, and particularly the displacement to this position, therefore results in a known volume displacement of liquid in the housing. The difference between a first position and a second position thus particularly results in the proportional volume displacement. It will be apparent that, for an axial plunger pump, the volume displacement is proportional to the distance travelled by the piston in the housing. The proportional volume displacement realizes a movement of the piston of the hydraulic cylinder of the clamping arm in that the volume displacement pushes against the piston of the hydraulic cylinder. The displacement of the piston allows a desired movement of the clamp to be controlled. The position of the clamp is therefore also always known.

Figure 1B shows the set in a second state. In the second state of workpiece clamping device 10 the first and the second clamping arms 20, 30 lie at a mutual distance which corresponds to for instance an outer dimension of a workpiece. In the second state the workpiece clamping device 10 is suitable for clamping the workpiece. The second state is achieved in that the volume of liquid displaced from volumetric pump 51 is supplied via hydraulic conduits 60 to hydraulic cylinder 40. By pushing against the piston of hydraulic cylinder 40 the volume displacement realizes a linear movement of the piston rod of hydraulic cylinder 40. The movement of servomotor 53 thus results in a proportional movement of hydraulic cylinder 40. Because of the proportional movement of hydraulic cylinder 40, the position of the clamping arm 30 coupled thereto can be controlled in accurate and simple manner. This allows workpieces with a range of different dimensions and shapes to be clamped quickly and still safely, whereby the set of workpiece clamping device 10 and the hydraulic control unit is also particularly suitable for relatively small production volumes, this in addition to clamping of workpieces in large-volume production.

Figures 1A and 1B further illustrate that the control unit 50 preferably comprises a controller configured to control the control unit 50 on the basis of a position status and/or a clamping status. In the position status the controller controls the control unit such that the second clamping arm 30 is displaceable between a first position A and a second position B. The second position B is a position wherein initial contact between first and second clamping arm 20, 30 and the workpiece to be clamped has just occurred, or is just about to occur. It will be apparent to the skilled person that the second position B is relative in relation to the workpiece to be clamped. In other words, the second position B depends on the dimensions of the workpiece placed between clamping arms 20, 30. Because of the proportional movement of clamping arm 30, the second position B can be set in efficient and safe manner and subject to the workpiece to be clamped.

The controller is further configured to control the control unit 50 on the basis of a clamping status. In the clamping status the controller controls the control unit 50 by primarily increasing the pressure in the hydraulic cylinder so as to realize clamping of the workpiece. This is illustrated with reference to positions B and C. Primarily increasing the pressure in the hydraulic cylinder does not take place until clamping arm 30 has been positioned in the second position B. Primarily increasing the pressure is possible because the servomotor is also controllable on the basis of a torque control. The torque control of the servomotor allows the pressure in the hydraulic pump to be increased. Increasing the pressure in the hydraulic pump translates to an increase of the force with which the workpiece is clamped. The clamping force can here be controlled by controlling the torque produced by the servomotor.

From the moment that clamping arms 20, 30 both initially touch the workpiece, so when position B is reached, the workpiece will exert a counter-reaction on the clamping arms. By moving the plunger further the pressure in the hydraulic cylinder will rise, whereby the clamping force exerted by the plunger rod on clamping arm 30, and, as a result, on the workpiece to be clamped, increases. A workpiece is thus tightly clamped in efficient manner with one and the same clamping device. It will be apparent that the clamping arm 30 which is controlled on the basis of the clamping status will still travel a small distance from position B to position C, for instance by compressing the workpiece. The distance between B and C can even be infinitely small in practice. In the clamping status the operation is analogous to an operation of a known clamp.

In a preferred embodiment the controller is configured to control the control unit on the basis of an initialization status. In the initialization status a zero point is set, wherein control unit 50 moves first clamping arm 20 and second clamping arm 30 toward each other until they touch each other. When first clamping arm 20 and second clamping arm 30 are in mutual contact (not shown) the zero point of workpiece clamping device 10 has been determined. Once the zero point is known, a coordinate of the first and/or second clamping arm is thus, owing to the feedback from the servomotor, always known when the first and/or second clamping arm moves to a further position. This allows for instance a dimension of workpieces to be verified when the second clamping arm 30 is in the second position B. This is realized by the following sequence of steps. The workpiece can be placed in the clamp, between the first and second clamping arm. The clamping arms can be moved toward each other by a position control of the servomotor. When the clamping arms both hit the workpiece, the torque applied in the servomotor in order to change the position of the clamping arms relative to each other will rise rapidly. This can be detected electronically, after which further position control of the servomotor is stopped. The position of the clamping arms at that moment is directly related to the size of the workpiece. In this way a dimension of the workpiece can be determined via the servomotor. The coordinates of the first and/or second clamping arm can also be fed back to the CNC machine so that the CNC machine can be prevented from machining the first or second clamping arm.

Figure 2 illustrates schematically a side view of a further embodiment of a hydraulic clamping device. The clamping device further comprises a frame 70. The frame 70 is configured to be coupled releasably to a worktable of a CNC machine. First clamping arm 20 and second clamping arm 30 are coupled to the frame. The first and second clamping arm can be coupled to the frame in different ways. In the illustrated embodiment of figure 2 the first and second clamping arm are provided with a mechanical coupling mechanism 100 such that first and second clamping arm 20, 30 are movable relative to each other in proportional manner in order to centrically clamp a workpiece. In the illustrated embodiment the mechanical coupling mechanism comprises two arms, each having a first and second segment 101a, 101b; 102a, 102b. The two arms are coupled pivotally to each other at the position of their respective first segment 101a, 102a. A pivot shaft 103 is provided for this purpose. The respective second segments 101b, 102b are each coupled to a respective clamping arm 20, 30. In the illustrated embodiment a part of the piston 40 of the hydraulic cylinder is connected to first clamping arm 20 and the housing 41 of the hydraulic cylinder is connected to second clamping arm 30. When the servomotor (not shown) moves, the hydraulic piston will thus move the two clamping arms relative to each other. Because the two arms of the mechanical coupling mechanism are coupled pivotally to each other, a workpiece is thus clamped centrically. It will be apparent that both clamping arms 20, 30 are movable in such an embodiment.

In figure 2 the first and second segments are the outer ends of the arms of the mechanical coupling mechanism and the hydraulic cylinder is coupled to the first and second clamping arm 20, 30. It will however be apparent to the skilled person that the two arms can also extend beyond clamping arms 20, 30 and pivot shaft 103. In such an embodiment (not illustrated) the first segments 101a, 102a extend beyond pivot shaft 103. Piston 42 can then be connected to first segment 102a and housing 41 to first segment 101a, such that the mechanical coupling mechanism is scissor-like. A movement of the hydraulic cylinder translates via the scissor-like mechanical coupling mechanism to a simultaneous and proportional movement of the first and second clamping arm 20, 30. A further advantage is realized by controlling a distance between first segment 101a, 102a and pivot shaft 103 relative to the distance between pivot shaft 103 and second segment 101b, 102b. This allows a clamping force to be controlled. The clamping force can thus be increased further using one and the same hydraulic cylinder, or the same clamping force can be achieved with a smaller hydraulic cylinder, for instance by setting the distance between the second segment and the pivot shaft to be one and a half times greater than a distance between the first segment and the pivot shaft. In a further preferred embodiment the pivot shaft 103 is mounted in an upright slot (not shown). The upright slot limits the degrees of freedom of the pivot shaft such that it is movable in only one upright direction. The clamping arms are further mounted movably in a lateral guide. This guide can for instance be the guide 110 as illustrated in figure 3. The degrees of freedom of the clamping arms are here limited such that they are movable along only one lateral direction. When the hydraulic cylinder moves clamping arms 20, 30 in such an embodiment, the movement of the clamping arms and the movement of the pivot shaft will also result in a centric clamping of the workpiece.

Figure 3 illustrates a schematic cross-section of a CNC machine with an embodiment of the set of a hydraulic control unit 50 and a hydraulic workpiece clamping device. Figure 3 illustrates a workroom 90 of the CNC machine with the broken line. The hydraulic workpiece clamping device comprises a frame 70 which is connected via connecting means 81 to a worktable 80 of the CNC machine. This allows the workpiece clamping device to be removed simply and in its entirety from the worktable.

Figure 3 particularly illustrates that the hydraulic control unit 50 is preferably placed outside the workroom of the CNC machine. The hydraulic conduits 60 thus extend from the control unit 50, which is placed outside the workroom, through workroom 90 and to the hydraulic cylinder 40. An advantage hereof is based on the insight that electrical connections in the workroom 90 of the CNC machine are typically not present and/or available. Servomotors can be accurately controlled, for instance using a controller. The movement of the servomotor is translated proportionally to the workpiece clamping device by the hydraulic cylinder 50 and via the hydraulic conduits 60. A set is thus provided which is able to clamp a workpiece in a CNC machine in accurate manner and guarantees a safe working environment for a user.

The CNC machine is preferably a multi-axis CNC machine. For instance a five-axis, six-axis or nine-axis CNC machine.

Figure 3 further illustrates that the second clamping arm 30 is arranged movably on a guide 110. Guide 110 is configured to guide the clamping arm in a linear direction. In other words, this allows a freedom of movement of the clamping arm arranged on guide 110 to be limited such that the clamping arm is movable in only one direction.

In a further alternative embodiment the hydraulic control unit 50 further comprises a feedback means 130 configured to feed a position of the clamp back to the CNC machine. On the basis of information obtained by feedback means 130 the CNC machine is always aware of the position of the clamp. This makes it possible in efficient manner always to use the CNC machine in calibrated manner, without further calibrating steps being necessary here.

Alternatively (not illustrated), the two clamping arms 20, 30 can be provided with a hydraulic control unit, such that the two clamping arms are individually controllable. This allows a further improvement of the accuracy. Because the two clamping arms are individually controllable, the workpiece clamping device can also be utilized more flexibly.

As shown in figure 3, a double-action cylinder is preferably provided in order to further improve the accuracy of the workpiece clamping device. For this purpose the hydraulic control unit is provided to control the double-action cylinder, for instance by giving the hydraulic unit the form of a double-action cylinder. Alternatively, two hydraulic control units can be provided, on the one hand to move the workpiece clamping device in an outward direction, for instance towards the other clamping arm, and on the other hand to move the workpiece clamping device in a return direction.

The skilled person will appreciate on the basis of the above description that the invention can be embodied in different ways and on the basis of different principles. The invention is not limited to the above described embodiments, but by the scope of the appended claims.

## Claims

1. Set of a hydraulic control unit (50) and a hydraulic workpiece clamping device (10) which is mountable on a worktable in a workroom of a CNC machine, wherein the workpiece clamping device (10) is configured to clamp a workpiece on the worktable, the workpiece clamping device comprising:
- a first clamping arm (20);
- a second clamping arm (30);
- a hydraulic cylinder (40) configured to change a distance, X, between the first clamping arm (20) and second clamping arm (30) in order to clamp the workpiece;
**characterised in that**:
hydraulic conduits (60) are provided to extend between the hydraulic control unit (50) and the hydraulic cylinder (40); wherein the hydraulic control unit (50) comprises a servomotor (53) which is coupled to a hydraulic pump (51) such that a movement of the servomotor results in a proportional movement of the hydraulic cylinder, wherein the hydraulic control unit comprises a controller configured to control the servomotor (53) on the basis of a position control, wherein the position of the servomotor is controlled, and on the basis of a torque control, wherein the torque produced by the servomotor (53) is controlled.

2. Set according to the foregoing claim, wherein the hydraulic pump (51) is an axial plunger pump which is provided with a housing and a piston (52), wherein the piston (52) is displaceable in the housing and is displaceable by the servomotor (53).

3. Set according to any one of the foregoing claims, wherein the hydraulic control unit (50) is configured to be placed outside the workroom (90) of the CNC machine.

4. Set according to any one of the foregoing claims, wherein the hydraulic workpiece clamping device (10) further comprises a frame (70), wherein the first and second clamping arm (20, 30) are coupled to the frame and wherein the frame is configured to be coupled releasably to the worktable (80) of the CNC machine.

5. Set according to the foregoing claim, wherein the frame (70) further comprises a guide (110) for guiding the first clamping arm in a linear direction and wherein the second clamping arm is mounted on the frame (70) of the workpiece clamping device (10).

6. Set according to any one of the foregoing claims, wherein the first clamping arm and the second clamping arm are provided on a mechanical coupling mechanism (100) such that the first and the second clamping arm move proportionally relative to each other so as to centrically clamp a workpiece.

7. Set according to any one of the foregoing claims, wherein a piston (42) of the hydraulic cylinder (40) is coupled to the first clamping arm (20) and the housing (41) of the hydraulic cylinder is coupled to the second clamping arm (30) so as to move the first and the second clamping arm proportionally relative to each other.

8. Set according to any one of the foregoing claims 6-7, wherein the mechanical coupling mechanism (100) comprises two arms, each having a respective first and second segment (101a, 101b; 102a, 102b), wherein the two arms are coupled pivotally to each other at the position of their respective first segments (101a, 102a) and wherein the second segments (101b, 102b) are coupled to respectively the first and the second clamping arm (20, 30).

9. Set according to any one of the foregoing claims, wherein a stroke (X) of the workpiece clamping device is at least 100 mm, preferably at least 150 mm, more preferably at least 250 mm

10. Set according to any one of the foregoing claims, wherein the hydraulic control unit (50) further comprises a feedback means (130) configured to feed a position of the clamp back to the CNC machine.

11. Set according to any one of the foregoing claims, wherein the hydraulic cylinder is provided for the purpose of moving the first clamping arm and wherein a further hydraulic cylinder is provided for the purpose of moving the second clamping arm, which further hydraulic cylinder is connected via further hydraulic conduits to a further hydraulic pump coupled to a further servomotor.

12. Set according to any one of the foregoing claims, wherein the controller of the control unit (50) is further configured to control the control unit on the basis of a position status and/or a clamping status, wherein in the position status the controller controls the control unit such that the first clamping arm is displaceable between a first position and a second position, wherein the second position is a position wherein the first clamping arm and the second clamping arm initially touch a product to be clamped and wherein the clamping status primarily comprises of increasing the pressure in the hydraulic cylinder in order to realize clamping of the workpiece.

13. CNC machine with a movable table
**characterised by**:
a set according to any one of the foregoing claims.

## Patentansprüche

1. Satz aus einer hydraulischen Steuereinheit (50) und einer hydraulischen Werkstückklemmvorrichtung (10), die auf einem Arbeitstisch in einem Arbeitsraum einer CNC-Maschine montierbar ist, wobei die Werkstückklemmvorrichtung (10) konfiguriert ist, um ein Werkstück auf dem Arbeitstisch festzuklemmen, die Werkstückklemmvorrichtung umfassend:
- einen ersten Klemmarm (20);
- einen zweiten Klemmarm (30);
- einen Hydraulikzylinder (40), der konfiguriert ist, um einen Abstand, X, zwischen dem ersten Klemmarm (20) und dem zweiten Klemmarm (30) zu ändern, um das Werkstück festzuklemmen;
**dadurch gekennzeichnet, dass:** Hydraulikleitungen (60) bereitgestellt sind, um sich zwischen der Hydrauliksteuereinheit (50) und dem Hydraulikzylinder (40) zu erstrecken; wobei die hydraulische Steuereinheit (50) einen Servomotor (53) umfasst, der mit einer Hydraulikpumpe (51) gekoppelt ist, derart, dass eine Bewegung des Servomotors eine proportionale Bewegung des Hydraulikzylinders zur Folge hat, wobei die hydraulische Steuereinheit eine Steuerung umfasst, die konfiguriert ist, um den Servomotor (53) auf der Basis einer Positionssteuerung zu steuern, wobei die Position des Servomotors gesteuert wird und auf der Basis einer Drehmomentsteuerung ist, wobei das Drehmoment, das durch den Servomotor (53) erzeugt wird, gesteuert wird.

2. Satz nach dem vorstehenden Anspruch, wobei die Hydraulikpumpe (51) eine Axialplungerpumpe ist, die mit einem Gehäuse und einem Kolben (52) versehen ist, wobei der Kolben (52) in dem Gehäuse verschiebbar ist und durch den Servomotor (53) verschiebbar ist.

3. Satz nach einem der vorstehenden Ansprüche, wobei die hydraulische Steuereinheit (50) konfiguriert ist, um außerhalb des Arbeitsraums (90) der CNC-Maschine platziert zu werden.

4. Satz nach einem der vorstehenden Ansprüche, wobei die hydraulische Werkstückklemmvorrichtung (10) ferner einen Rahmen (70) umfasst, wobei der erste und der zweite Klemmarm (20, 30) mit dem Rahmen gekoppelt sind und wobei der Rahmen konfiguriert ist, um mit dem Arbeitstisch (80) der CNC-Maschine lösbar gekoppelt zu werden.

5. Satz nach dem vorstehenden Anspruch, wobei der Rahmen (70) ferner eine Führung (110) zum Führen des ersten Klemmarms in einer linearen Richtung umfasst und wobei der zweite Klemmarm an dem Rahmen (70) der Werkstückklemmvorrichtung (10) montiert ist.

6. Satz nach einem der vorstehenden Ansprüche, wobei der erste Klemmarm und der zweite Klemmarm an einem mechanischen Kopplungsmechanismus (100) bereitgestellt sind, derart, dass sich der erste und der zweite Klemmarm proportional relativ zueinander bewegen, um ein Werkstück zentrisch festzuklemmen.

7. Satz nach einem der vorstehenden Ansprüche, wobei ein Kolben (42) des Hydraulikzylinders (40) mit dem ersten Klemmarm (20) gekoppelt ist und das Gehäuse (41) des Hydraulikzylinders mit dem zweiten Klemmarm (30) gekoppelt ist, um den ersten und den zweiten Klemmarm proportional relativ zueinander zu bewegen.

8. Satz nach einem der vorstehenden Ansprüche 6 bis 7, wobei der mechanische Kopplungsmechanismus (100) zwei Arme umfasst, die jeweils ein erstes und ein zweites Segment (101a, 101b; 102a, 102b) aufweisen, wobei die zwei Arme an der Position ihrer jeweiligen ersten Segmente (101a, 102a) schwenkbar miteinander gekoppelt sind und wobei die zweiten Segmente (101b, 102b) jeweils mit dem ersten und dem zweiten Klemmarm (20, 30) gekoppelt sind.

9. Satz nach einem der vorstehenden Ansprüche, wobei ein Hub (X) der Werkstückklemmvorrichtung mindestens 100 mm, vorzugsweise mindestens 150 mm, mehr bevorzugt mindestens 250 mm beträgt

10. Satz nach einem der vorstehenden Ansprüche, wobei die hydraulische Steuereinheit (50) ferner ein Rückmeldungsmittel (130) umfasst, das konfiguriert ist, um eine Position der Klemme an die CNC-Maschine zurückzumelden.

11. Satz nach einem der vorstehenden Ansprüche, wobei der Hydraulikzylinder zum Zwecke des Bewegens des ersten Klemmarms bereitgestellt ist und wobei ein weiterer Hydraulikzylinder zum Zwecke des Bewegens des zweiten Klemmarms bereitgestellt ist, der über weitere Hydraulikleitungen mit einer weiteren Hydraulikpumpe verbunden ist, die mit einem weiteren Servomotor gekoppelt ist.

12. Satz nach einem der vorstehenden Ansprüche, wobei die Steuerung der Steuereinheit (50) ferner konfiguriert ist, um die Steuereinheit auf der Basis eines Positionsstatus und/oder eines Klemmstatus zu steuern, wobei die Steuerung in dem Positionsstatus die Steuereinheit steuert, derart, dass der erste Klemmarm zwischen einer ersten Position und einer zweiten Position verschiebbar ist, wobei die zweite Position eine Position ist, in der der erste Klemmarm und der zweite Klemmarm anfänglich ein zu klemmendes Produkt berühren, und wobei der Klemmstatus hauptsächlich aus einem Erhöhen des Drucks in dem Hydraulikzylinder besteht, um das Klemmen des Werkstücks zu realisieren.

13. CNC-Maschine mit einem beweglichen Tisch,
**die gekennzeichnet ist durch:** einen Satz nach einem der vorstehenden Ansprüche.

## Revendications

1. Ensemble d'une unité de commande hydraulique (50) et d'un dispositif hydraulique de serrage de pièce de travail (10) qui peut être monté sur une table de travail dans un atelier d'une machine CNC, dans lequel le dispositif de serrage de pièce de travail (10) est conçu pour serrer une pièce de travail sur la table de travail, le dispositif de serrage de pièce de travail comprenant :
- un premier bras de serrage (20) ;
- un second bras de serrage (30) ;
- un vérin hydraulique (40) configuré pour modifier une distance, X, entre le premier bras de serrage (20) et le second bras de serrage (30) afin de serrer la pièce de travail ;
**caractérisé en ce que :** des conduits hydrauliques (60) sont prévus pour s'étendre entre l'unité de commande hydraulique (50) et le vérin hydraulique (40) ; dans lequel l'unité de commande hydraulique (50) comprend un servomoteur (53) qui est accouplé à une pompe hydraulique (51) de telle sorte qu'un mouvement du servomoteur entraîne un mouvement proportionnel du vérin hydraulique, dans lequel l'unité de commande hydraulique comprend un dispositif de commande configuré pour commander le servomoteur (53) sur la base d'une commande de position, dans lequel la position du servomoteur est commandée, et sur la base d'une commande de couple, dans lequel le couple produit par le servomoteur (53) est commandé.

2. Ensemble selon la revendication précédente, dans lequel la pompe hydraulique (51) est une pompe axiale à piston qui est pourvue d'un boîtier et d'un piston (52), dans lequel le piston (52) est déplaçable dans le boîtier et est déplaçable par le servomoteur (53).

3. Ensemble selon l'une quelconque des revendications précédentes, dans lequel l'unité de commande hydraulique (50) est conçue pour être placée à l'extérieur de l'atelier (90) de la machine CNC.

4. Ensemble selon l'une quelconque des revendications précédentes, dans lequel le dispositif hydraulique de serrage de pièce de travail (10) comprend en outre un cadre (70), dans lequel le premier et le second bras de serrage (20, 30) sont accouplés au cadre et dans lequel le cadre est conçu pour être accouplé de manière amovible à la table de travail (80) de la machine CNC.

5. Ensemble selon la revendication précédente, dans lequel le cadre (70) comprend en outre un guide (110) permettant de guider le premier bras de serrage dans une direction linéaire et dans lequel le second bras de serrage est monté sur le cadre (70) du dispositif de serrage de pièce de travail (10).

6. Ensemble selon l'une quelconque des revendications précédentes, dans lequel le premier bras de serrage et le second bras de serrage sont prévus sur un mécanisme d'accouplement mécanique (100) de telle sorte que le premier et le second bras de serrage se déplacent proportionnellement l'un par rapport à l'autre de manière à serrer de manière centrée une pièce de travail.

7. Ensemble selon l'une quelconque des revendications précédentes, dans lequel un piston (42) du vérin hydraulique (40) est accouplé au premier bras de serrage (20) et le boîtier (41) du vérin hydraulique est accouplé au second bras de serrage (30) de manière à déplacer le premier et le second bras de serrage proportionnellement l'un par rapport à l'autre.

8. Ensemble selon l'une des revendications 6 à 7 précédentes, dans lequel le mécanisme d'accouplement mécanique (100) comprend deux bras, chacun ayant un premier et un second segment (101a, 101b ; 102a, 102b) respectifs, dans lequel les deux bras sont accouplés de manière pivotante l'un à l'autre à la position de leurs premiers segments respectifs (101a, 102a) et dans lequel les seconds segments (101b, 102b) sont accouplés respectivement au premier et au second bras de serrage (20, 30).

9. Ensemble selon l'une quelconque des revendications précédentes, dans lequel une course (X) du dispositif de serrage de pièce de travail est d'au moins 100 mm, de préférence d'au moins 150 mm, plus préférablement d'au moins 250 mm

10. Ensemble selon l'une quelconque des revendications précédentes, dans lequel l'unité de commande hydraulique (50) comprend en outre un moyen de rétroaction (130) configuré pour renvoyer une position de la pince à la machine CNC.

11. Ensemble selon l'une quelconque des revendications précédentes, dans lequel le vérin hydraulique est prévu pour déplacer le premier bras de serrage et dans lequel un vérin hydraulique supplémentaire est prévu pour déplacer le second bras de serrage, lequel vérin hydraulique supplémentaire est relié par l'intermédiaire de conduits hydrauliques supplémentaires à une pompe hydraulique supplémentaire accouplée à un servomoteur supplémentaire.

12. Ensemble selon l'une quelconque des revendications précédentes, dans lequel le dispositif de commande de l'unité de commande (50) est en outre configuré pour commander l'unité de commande sur la base d'un état de position et/ou d'un état de serrage, dans lequel, dans l'état de position, le dispositif de commande commande l'unité de commande de telle sorte que le premier bras de serrage est déplaçable entre une première position et une seconde position, dans lequel la seconde position est une position dans laquelle le premier bras de serrage et le second bras de serrage touchent initialement un produit à serrer et dans lequel l'état de serrage comprend principalement l'augmentation de la pression dans le vérin hydraulique afin de réaliser le serrage de la pièce de travail.

13. Machine CNC à table mobile **caractérisée par :** un ensemble selon l'une quelconque des revendications précédentes.
